# EUROPEAN PATENT SPECIFICATION

(11) **EP 2 248 788 B1**
(45) Date of publication and mention of the grant of the patent: **16.07.2014**
(21) Application number: 08868744.7
(22) Date of filing: 19.12.2008
(51) Int. Cl.: C04B 28/06, C04B 14/10, C04B 14/32

(54) **CASTING MATERIAL BASED ON SILICON CARBIDE**
VERGIESSMASSE AUF BASIS VON SILICIUMCARBID
MATÉRIAU DE COULÉE À BASE DE CARBURE DE SILICIUM

(30) Priority: 28.12.2007 JP 2007340358
(43) Date of publication of application: 10.11.2010
(73) Proprietor: Nippon Crucible Co., Ltd., Shibuya-ku Tokyo 150-0013 (JP)
(72) Inventor: KOMATSU, Toshio, Toyota-shi Aichi 470-0371 (JP); KAJIWARA, Yoji, Toyota-shi Aichi 470-0371 (JP)
(74) Representative: Müller-Boré & Partner Patentanwälte PartG mbB
(86) International application number: PCT/JP2008/073217
(87) International publication number: WO 2009/084484

(56) References cited:
- EP-A1- 1 862 482
- WO-A1-88/06263
- DD-A5- 294 701
- JP-A- 5 058 752
- JP-A- 7 315 933
- JP-A- 7 316 615
- JP-A- 2000 290 078
- JP-A- 2005 187 289
- RU-C1- 2 055 054

## Description

The present invention relates to a silicon carbide-based casting material used for the lining of blast furnace troughs or the like.

Blast furnace troughs are used as a flow path for conveying hot metal from the furnace taphole where the metal is discharged. Since the blast furnace trough is susceptible to chemical erosion by slag or the like, there has been a common technique to coat the inner face of the furnace with a silicon carbide-based casting material having a high corrosion resistance.

For example, Patent Literature 1 discloses a monolithic refractory material containing a large quantity of silicon carbide. The monolithic refractory material is obtained by incorporating 55 to 90 mass% of silicon carbide into a refractory material to improve corrosion resistance.

Patent document 1: Japanese Unexamined Patent Publication No. 2002-20177

Further, RU 2 055 054 C1 discloses a refractory concrete mixture for lining rotary furnaces containing (in wt.%) scrap SiC components that contain 45 to 60% SiC; high alumina cement in 4 to 8% and refractory clay in 10 to 20%.

However, a high proportion of silicon carbide in a refractory decreases flowability of the casting material, which results in a decrease in application of the casting material.

Accordingly, an object of the present invention is to provide a silicon carbide-based casting material superior in corrosion resistance and workability.

The above object of the present invention is achieved by providing a silicon carbide-based casting material as defined in claim 1.

The present invention provides a silicon carbide-based casting material superior in corrosion resistance and workability.

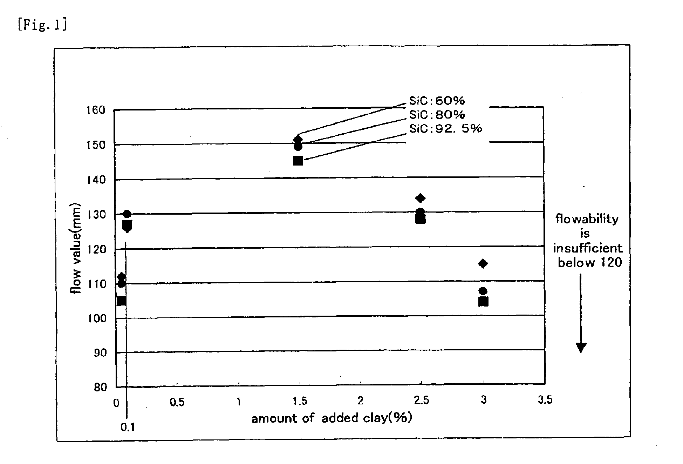

Fig. 1: a graph showing measured flowability according to the Example and Comparative Example of the present invention.

One embodiment of the present invention is described below. The silicon carbide-based casting material according to the following embodiment is particularly suitable for lining blast furnace troughs.

The subject silicon carbide-based casting material is formed of refractory powder containing 60 to 95 weight% of silicon carbide. The content of silicon carbide must be no less than 60 weight% to ensure desirable corrosion resistance; however, a content of greater than 95 weight% decreases flowability and also makes it difficult to appropriately incorporate other additives such as a binder. The silicon carbide may be selected from commercially-available products, and preferably has a purity of 90% or greater. Further, the silicon carbide preferably has a particle size distribution ranging from superfine particles to about 12mm to ensure sufficient filling density.

Apart from silicon carbide, the refractory powder contains alumina cement as a binder and may contain, for example, alumina; carbon materials, such as pitch, graphite powder or carbon black; boron carbide as antioxidant; and metal silicon powder.

The silicon carbide-based casting material of the present invention is obtained by adding 0.1 to 2.5 parts by weight in outer percentage of a kaolin based clay to 100 parts by weight of refractory powder containing 60 to 95 weight% of silicon carbide. With this composition, the silicon carbide-based casting material of the present invention improves flowability and oxidation resistance. The kaolin based clay is a clay represented by a chemical formula Al₂O₃-2SiO₂·2H₂O, mainly containing kaolinite, dickite, nacrite, halloysite or like minerals. Kibushi clay and potter's clay may also be used.

To form the lining of a blast furnace trough, the silicon carbide-based casting material is kneaded with water, and placed in a formwork to be molded. As required, the refractory powder may contain a dispersant to improve the dispersion effect.

As described in the example below, the content of the kaolin based clay greatly affects the flowability of the resulting hydrolytic mixture. More specifically, if the content is less than 0.1 parts by weight with respect to 100 parts by weight of the refractory powder, the effect given by the addition of the kaolin based clay is not sufficiently exhibited, and desirable flowability is not ensured. In contrast, if the content is more than 2.5 parts by weight, the viscosity increases, thereby decreasing the flowability. Accordingly, the above range of the content of the kaolin based clay ensures desired workability even with a minimum amount of water. Consequently, it is possible to form a sufficiently dense layer suitable for the lining of a blast furnace trough. The optimal amount of the kaolin based clay is about 1.5 parts by weight in outer percentage, with respect to 100 parts by weight of refractory powder.

The silicon carbide-based casting material of the present invention contains a small amount of kaolin based clay, and thereby ensures desirable flowability. Therefore, it is not necessary to add silica to the casting material. This is also conducive to the improvement of corrosion resistance.

### EXAMPLE 1

Hereinafter, the present invention is more specifically explained in reference to the following Examples and Comparative Examples. However, the present invention is not limited to these examples.

As Examples 1 to 9 and Comparative Examples 1 to 6, the materials in Table 1 were mixed at the specified proportions, and mixed with the water in the amount specified in Table 1. The mixtures were kneaded. In these Examples and Comparative Examples, kibushi clay was used as the kaolin based clay.

**[Table 1]**

| | | | Examples | | | | | | | | | Comparative Examples | | | | | |
|---|---|---|---|---|---|---|---|---|---|---|---|---|---|---|---|---|---|
| | | | 1 | 2 | 3 | 4 | 5 | 6 | 7 | 8 | 9 | 1 | 2 | 3 | 4 | 5 | 6 |
| Refractory powder | Alumina | 8-12mm | 5 | | | 5 | | | 5 | | | 5 | | | 5 | | |
| | | 5-8mm | 10 | | | 10 | | | 10 | | | 10 | | | 10 | | |
| | | 3-5mm | 10 | 5 | | 10 | 5 | | 10 | 5 | | 10 | 5 | | 10 | 5 | |
| | | 1-3mm | | | | | | | | | | | | | | | |
| | | Fine particles | 7.5 | 7.5 | | 7.5 | 7.5 | | 7.5 | 7.5 | | 7.5 | 7.5 | | 7.5 | 7.5 | |
| | | Gross alumina | 32.5 | 12.5 | | 32.5 | 12.5 | | 32.5 | 12.5 | | 32.5 | 12.5 | | 32.5 | 12.5 | |
| | Silicon carbide | 8-12mm | | 5 | 5 | | 5 | 5 | | 5 | 5 | | 5 | 5 | | 5 | 5 |
| | | 5-8mm | 2.5 | 12.5 | 12.5 | 2.5 | 12.5 | 12.5 | 2.5 | 12.5 | 12.5 | 2.5 | 12.5 | 12.5 | 2.5 | 12.5 | 12.5 |
| | | 3-5mm | 10 | 15 | 20 | 10 | 15 | 20 | 10 | 15 | 20 | 10 | 15 | 20 | 10 | 15 | 20 |
| | | 1-3mm | 17.5 | 17.5 | 17.5 | 17.5 | 17.5 | 17.5 | 17.5 | 17.5 | 17.5 | 17.5 | 17.5 | 17.5 | 17.5 | 17.5 | 17.5 |
| | | Less than 1mm | 15 | 15 | 15 | 15 | 15 | 15 | 15 | 15 | 15 | 15 | 15 | 15 | 15 | 15 | 15 |
| | | Superfine particles | 15 | 15 | 22.5 | 15 | 15 | 22.5 | 15 | 15 | 22.5 | 15 | 15 | 22.5 | 15 | 15 | 22.5 |
| | | Gross silicon carbide | 60 | 80 | 92.5 | 60 | 80 | 92.5 | 60 | 80 | 92.5 | 60 | 80 | 92.5 | 60 | 80 | 92.5 |
| | Alumina cement | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Pitch | | 1 | 1 | 1 | 1 | 1 | 1 | 1 | 1 | 1 | 1 | 1 | 1 | 1 | 1 | 1 |
| | Graphite (less than 1mm) | | 1 | 1 | 1 | 1 | 1 | 1 | 1 | 1 | 1 | 1 | 1 | 1 | 1 | 1 | 1 |
| | Carbon black | | 1 | 1 | 1 | 1 | 1 | 1 | 1 | 1 | 1 | 1 | 1 | 1 | 1 | 1 | 1 |
| | Metal silicon powder | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Boron carbide | | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| | Kyanite (less than 0.5mm) | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| Dispersant etc. | | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| Kaolin based clay | | | 0.1 | 0.1 | 0.1 | 1.5 | 1.5 | 1.5 | 2.5 | 2.5 | 2.5 | 0 | 0 | 0 | 3 | 3 | 3 |
| Water added | | | 5.8 | 6.2 | 6.5 | 5.8 | 6.2 | 6.5 | 5.8 | 6.2 | 6.5 | 5.8 | 6.2 | 6.5 | 5.8 | 6.2 | 6.5 |

In Table 1, the proportion (weight%) of the silicon carbide in the refractory powder is set to 60, 80, and 92.5. The content and particle diameter of alumina, which accounts for the rest of the composition, was adjusted so that all mixtures had uniform density. Fig. 1 shows the measurement results of a flow value of a part of the mixture. The measurement was performed according to JIS R 5201 (Physical testing method for cement).

The flow value must be no less than 120 to ensure smooth supply of the casting material into a mold. As shown in Fig. 1, satisfactory flowability was obtained when the content (outer percentage) of the kaolin based clay was in a range of from 0.1 to 2.5 parts by weight with respect to 100 parts by weight of refractory powder. The flowability was particularly superior when the content of the kaolin based clay was about 1.5 parts by weight.

## Claims

1. A silicon carbide-based casting material containing 0.1 to 2.5 parts by weight of a kaolin based clay and 100 parts by weight of refractory powder consisting only of 60 to 95 weight% of silicon carbide, alumina cement as a binder, and optionally alumina, carbon materials, boron carbide, metal silicon powder, dispersants and 0.5 wt.-% of kyanite, wherein no silica is added to the silicon carbide-based casting material.

2. The silicon carbide-based casting material according to claim 1, containing 1.5 parts by weight of a kaolin based clay and 100 parts by weight of the refractory powder.

## Patentansprüche

1. Auf Siliziumcarbid basierender Gusswerkstoff, enthaltend 0,1 bis 2,5 Gewichtsteile eines auf Kaolin basierenden Tons und 100 Gewichtsteile eines feuerfesten Pulvers, bestehend nur aus 60 bis 95 Gew.-% Siliziumcarbid, Tonerdezement als Bindemittel, und gegebenenfalls Aluminiumoxid, Kohlenstoffmaterialien, Borcarbid, metallischem Siliziumpulver, Dispergiermittel und 0,5 Gew.-% Cyanit, wobei dem auf Siliziumcarbid basierenden Gusswerkstoff keine Kieselerde zugesetzt wird.

2. Auf Siliziumcarbid basierender Gusswerkstoff nach Anspruch 1, enthaltend 1,5 Gewichtsteile eines auf Kaolin basierenden Tons und 100 Gewichtsteile des feuerfesten Pulvers.

## Revendications

1. Matériau de coulée à base de carbure de silicium contenant 0,1 à 2,5 parties en poids d'une argile à base de kaolin et 100 parties en poids d'une poudre réfractaire constituée uniquement de 60 à 95 % en poids de carbure de silicium, de ciment à base d'alumine en tant que liant et éventuellement d'alumine, de matériaux carbonés, de carbure de bore, d'une poudre métallique de silicium, de dispersants et de 0,5 % en poids de kyanite, dans lequel aucune silice n'est ajoutée au matériau de coulée à base de carbure de silicium.

2. Matériau de coulée à base de carbure de silicium selon la revendication 1, contenant 1,5 parties en poids d'une argile à base de kaolin et 100 parties en poids de la poudre réfractaire.
